# EUROPEAN PATENT APPLICATION

(11) **EP 3 352 041 A1**
(43) Date of publication of application: **25.07.2018**
(21) Application number: 17152363.2
(22) Date of filing: 20.01.2017
(51) Int. Cl.: G05D 1/10

(54) **SYSTEM FOR PROVIDING A VISUAL AERIAL PRESENTATION**

(71) Applicant: Ars Electronica Linz GmbH & Co KG, 4040 Linz (AT); Flying Screens Ltd., Wolverhampton, West Midlands WVIO 9RU (GB)
(72) Inventor: Green, Dave, Essex, CM16 7DY (GB); Hörtner, Horst, 4115 Kleinzell (AT)
(74) Representative: Schwarz & Partner Patentanwälte OG

(57) **Abstract**

System (1, 20, 30) for providing a visual aerial presentation (2) comprising a ground-based control station (4) and at least two UAVs (6), wherein each UAV (6) comprises a body (10), a display (11) for displaying pixel information, and a control unit (8) configured to move the UAV (6) in the aerial space according to position information.

The display (11) is an integral part of the body (10) and the control unit (8) is configured to move the UAV (6) to an image position (13, 13a, 13b, 13c) according to the position information, and to present at this image position (13, 13a, 13b, 13c) via the display (11) a portion of pixels (3a, 3b, 3c) according to the pixel information, wherein the pixel information and the position information are preset and stored in a storage unit (14) of the UAV (6) and/ transmitted by the control station (4) in real-time.

## Description

The present invention is related to a system for providing a visual aerial presentation of a number of pixels, wherein the system comprises a ground-based control station and at least two unmanned aerial vehicles (UAVs), wherein each UAV comprises a body, a display for displaying pixel information, and a control unit configured to control via feedback from a position sensor unit a drive unit of the UAV in order to move the UAV in the aerial space according to position information.

The present invention is furthermore related to a method for providing a visual aerial presentation of a number of pixels, wherein the visual aerial presentation is displayed by at least two displays each carried by an UAV, wherein each UAV is moved in the aerial space by a drive unit controlled by a control unit via feedback from a position sensor unit.

Visual presentations displaying static and dynamic information are getting more and more popular, especially in public space or during cultural or sporting events. While the visual projection onto static video walls or buildings offers acceptable solutions, visual presentations that are more flexible, dynamic and interactive are of growing interest, especially in terms of visual presentations within the aerial space.

US 9 169 030 B2 discloses a system and a method for creating aerial displays with two or more UAVs, such as air drones in form of multicopters. Each UAV carries a payload comprising displaying means composed of controllable lights inside a light projection surface, such as a diffusive cylindrical screen. Thus, every UAV including its payload represents a pixel of the aerial display that can change its position within the aerial space. Nevertheless, this known system has the disadvantage, that the complexity of the information to be displayed and the mobility of the UAVs are limited due to the type and the design of the payload in form of the displaying means.

It is an objective of the presented invention to provide a system for providing a visual aerial presentation that avoids the drawbacks of the above given system and in general improves the systems known in the state of the art.

This objective is achieved with a system, wherein the display is an integral part of the body of the UAV and the control unit is configured to move the UAV to an image position according to the position information and to present at this image position via the display a portion of pixels of the number of pixels according to the pixel information, wherein the pixel information and the position information are preset and stored in a storage unit of the UAV and/ or computed by the control station and transmitted via communication units of the control station and the UAV to the control unit essentially in real-time.

Furthermore, this objective is achieved with a method comprising the following steps:
a) move the UAV in the aerial space to an image position according to position information; and
b) present at this image position via the display a portion of pixels of the number of pixels according to pixel information, wherein the display is an integral part of a body of the UAV, and wherein the pixel information and the position information are preset and stored in a storage unit of the UAV and/ or computed by a control station and transmitted via communication units of the control station and the UAV to the control essentially in real-time.

The system and the method according to the invention provide visual aerial presentations that are flexible, dynamic and interactive. Since each display is an integral part of the body of one individual UAV, wherein the display displays a certain portion of the aerial presentation and the UAV is essentially freely movable within the three-dimensional aerial space. Thus, the system according to the invention enables dynamic "flying" or "floating" image or video wall configurations that can be created and shaped within the aerial space essentially without limitations. Such a "flying" or "floating" video wall is similar to existing video walls based on a number of pixels, for example light emitting diode (LED) video walls, with the difference that the main limitation of these existing video walls, namely being architecturally and spatially static, can be overcome.

In an advantageous embodiment of the system according to the invention, the sum of all portions of pixels presented via the displays of the UAVs equals the number of pixels of the visual aerial presentation. If the body is additionally designed in an advantageous manner, wherein the display is an integral part of the body, the system enables the creation of floating and seamless virtual single displays.

Advantageously, the control station and the control units are configured to communicate time code signals via the communication units of the control station and the UAVs in order to perform time code synchronisation of the position information and/ or the pixel information. Thus, it is guaranteed that every single portion of pixels of the number of pixels presented at its image position via the display of one individual UAV is presented at the right point of time.

In an advantageous embodiment of the invention, all of the position information and the pixel information are stored in the storage unit of each UAV, wherein each control unit is configured to communicate time code signals via the communication units of the UAVs in order to perform time code synchronisation of the position information and/ or the pixel information. As a consequence, the control station may be omitted and the UAVs are able to present the visual aerial presentation fully autonomously without further external control or intervention.

In an advantageous embodiment of the invention, the pixel information comprises dynamic information, wherein the portion of pixels presented via the display of at least one UAV changes between two points in time. Thus, the system according to the invention allows to create flying or floating and seamless two-dimensional or three-dimensional virtual single displays. In an alternative advantageous embodiment, the sum of all portions of pixels presented via the displays of the UAVs equals the number of pixels of the visual aerial presentation.

In a very advantageous embodiment of the invention the position information comprises dynamic information, wherein the image position of at least one UAV changes at least one time between two points in time. Thus, the system according to the invention allows to create spatially or architecturally dynamic flying or floating and seamless two-dimensional or three-dimensional virtual single displays that can be rearranged within the aerial space, for example in terms of side ratio or enveloping surface.

In the above context, advantageously, the control station and/ or the control units are configured to change the displayed pixel information essentially in real-time based on the change of the image position. Thus, an image or video can be displayed continuously, even during spatial rearrangement of the UAVs.

In a further advantageous embodiment of the invention, each UAV further comprises a space sensor unit, wherein the control unit is configured to move the UAV according to swarm intelligence, wherein the control station and/ or the control unit are configured to update essentially in real-time the position information and/ or the pixel information via feedback from the space sensor unit. As a consequence, the UAVs are able to fully autonomously present the visual aerial presentation without further external control or intervention, whereas the amount of information that needs to be communicated between the UAVs is advantageously reduced.

In an further advantageous embodiment of the invention, each UAV further comprises a orientation sensor unit, wherein the control unit is configured to rotate via feedback from the orientation sensor unit and/ or the control station the UAV according to display orientation information. Thus, amongst others, the effect of seamlessness of the virtual single display can be preserved, even during spatial rearrangement of the UAVs. In addition, visual effects on the basis of dynamic display rotation can be created.

Advantageously, the display is a flat assembly of pixel components, preferably a frameless flat screen, or a curved assembly of pixel components, wherein the curvature of the assembly corresponds to the body of the UAV. Thus, amongst others, the effect of seamlessness of the virtual single display can be improved, even during spatial rearrangement of the UAVs.

The above given and further advantageous embodiments of the invention will be explained based on the following description and the accompanying drawings. The person skilled in the art will understand that the explained embodiments are in no way restricting and that various embodiments may be combined.
FIG. 1 shows in a perspective schematic representation a system according to a first embodiment of the invention.
FIG. 2 shows in a perspective schematic representation an unmanned aerial vehicle (UAV), namely a multicopter, according to a first embodiment of the UAV.
FIG. 3A and FIG. 3B show in perspective schematic representations alternative embodiments of the UAV.
FIG. 4 shows in a schematic representation in a front elevation a system according to a second embodiment of the invention.
FIG. 5 shows in a schematic representation in a front elevation a system according to a third embodiment of the invention.
FIG. 6 shows in a schematic representation in a front elevation a system according to a fourth embodiment of the invention.
FIG. 7A and FIG. 7B show in schematic representations in a side elevation alternative spatial configurations of the UAVs.
FIG. 8A and FIG. 8B show in schematic representations in a top view the alternative spatial configurations of the UAVs, respectively according to FIG. 7A and FIG. 7B.

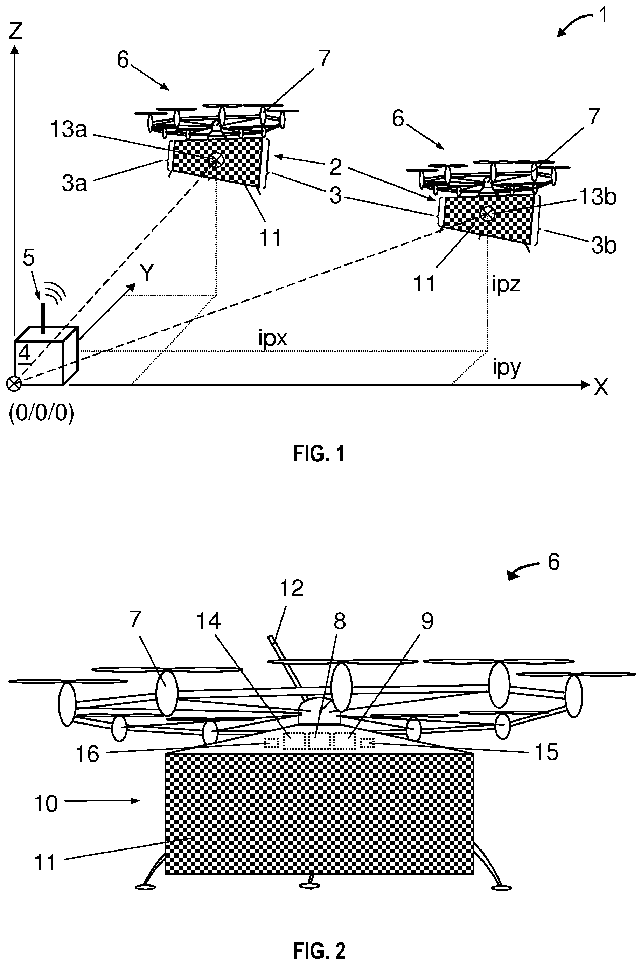

Figure 1 shows a system 1 according to a first embodiment of the invention for providing a visual aerial presentation 2 of a number of pixels 3. The system 1 comprises a ground-based control station 4 with a communication unit 5 and two UAVs 6. Figure 2 shows an exemplary embodiment of such an UAV 6 realized as a multicopter. A corresponding drive unit 7 of the UAV 6 consists of ten rotor units, whereas one cannot be seen in figure 2, which are driven, for example, by means of ten electric motors. The drive unit 7 is controlled by a control unit 8. Via feedback from a position sensor unit 9, the control unit 8 controls the drive unit 7 in order to move, or fly, the UAV 6 in the aerial space according to position information. The UAV 6 further comprises a body 10 with a display 11 for displaying pixel information. The display 11 is an integral part of the body 10. The UAV 6 further comprises a communication unit 12, a storage unit 14, an orientation sensor unit 15, and a space sensor unit 16.

The UAV 6 may alternatively be embodied as another variant of a multicopter, for example as an "octo-copter" with eight rotor units or a "quad-copter" with four rotor units, essentially any number of rotor units being possible. The UAV 6 can, however, also be designed as an aircraft which can be stabilized in its position in the aerial space (for example a zeppelin or a balloon). The term "aerial space" refers to any possible space above an artificial or natural ground inside or outside an artificial or natural space or building.

The control unit 8 is configured to move the UAV 6 to an image position 13, in the context of figure 1 to the image position 13a or 13b, in the aerial space according to the position information, and to present at this image position 13a or 13b via the display 11 a portion of pixels 3a or 3b of the number of pixels 3 according to the pixel information. Thus, depending of the overall number of UAVs 6 of the system 1, the displayed content of the display 11 of an UAV 6 is based on the pixel information according to its relative position based on the image position 13 in dependence to the image positions 13 of the displays 11 of the other UAVs 6. The pixel information and the position information are computed by the control station 4 and transmitted via the communication unit 5 of the control station 4 and the communication unit 12 of the UAV 6 to the control unit 8.

The control station 4 may be any external control device, for example a laptop, a smart phone or a ground control unit. The pixel information and the position information can be computed and communicated essentially in real time, whereby smooth communication is ensured, and whereby the information regarding the position or image position 13 and/ or the portion of pixels 3a or 3b can, if appropriate, be updated at any time.

Alternatively, a part of the pixel information and a part of the position information may be preset and stored in a storage unit 14 of the UAV 6 and computed by the control unit 8. Alternatively, all of the pixel information and all of the position information may be preset and stored in the storage unit 14 and computed by the control unit 8, whereas no control station 4 would be needed.

In figure 1 the number of pixels 3 of the visual aerial presentation 2 equals the sum of the two portions of pixels 3a and 3b displayed at the image positions 13a and 13b. Thus, the two portions of pixels 3a and 3b presented via the displays 11 of the two UAVs 6 display the whole pixel information of the visual aerial presentation 2. The visual aerial presentation 2 may be an image, for example an essentially flat "two-dimensional"-image or curved "three-dimensional"-image in the aerial space. Thus, the pixel information is only static information during the presentation duration of the visual aerial presentation 2, and the displays 11 display the whole pixel information during the whole presentation duration. Alternatively, the visual aerial presentation 2 may be a video. Thus, the pixel information is only dynamic information during the presentation duration of the visual aerial presentation 2, and the displays 11 display the whole pixel information at every certain point in time, for example at one frame of a video with 25 frames per second. Alternatively, the visual aerial presentation 2 may be a combination of one or more images with one or more videos.

Alternatively, the number of pixels 3 may not equal the sum of the two portions of pixels 3a and 3b displayed by displays 11 of the bodies 10 of the UAVs 6. Thus, the two portions of pixels 3a and 3b would only display a part of the pixel information of the visual aerial presentation 2. Alternatively, the visual aerial presentation 2 may be a combination of the above explained possibilities, namely that during a part or parts of the presentation duration of the visual aerial presentation 2 the number of pixels 3 equals the sum of the two portions of pixels 3a and 3b, and that during the residual part or parts of the presentation duration of the visual aerial presentation 2 the number of pixels 3 does not equal the sum of the two portions of pixels 3a and 3b.

In figure 1, the image positions 13a and 13b are based on relative coordinates defined along three virtual spatial axes X, Y and Z. In an origin (0,0,0) of this coordinate system the control station 4 is situated. A UAV 6 is moved to the image position 13a or 13b computed by the control station 4 based on the position information, which in the example of the image position 13b are ipx, ipy, and ipz.

Alternatively, the position information may be absolute coordinates such as "Global Positioning System (GPS)"-based coordinates, for example, data in the GPS Exchange format (GPX). The data in the GPX format can contain geodata, i.e. the geographical coordinate width, length and height. Alternatively, the data may also be based on the Galileo, GLONASS, Beidou / Compass or any other satellite navigation and / or timing system, or on a local or building-based navigation system for determining the position of the UAV 6 inside and outside buildings (such as position determination by transmitting transmission signals) or optical position determination systems).

The UAV 6 uses the position sensor unit 9 or, for example, a GPS receiver to always match the current position or image position 13 of the UAV 6 with the predefined image position 13, 13a or 13b based on the position information.

The visual aerial presentation 2 may be spatially static, which means that the position information is only static information during the presentation duration of the visual aerial presentation 2. Thus, the UAVs 6 hold their image position 13a or 13b during the whole presentation duration. The visual aerial presentation 2 may be spatially dynamic, which means that a certain part or all of the position information is dynamic information. Thus, at least one UAV 6 changes its image position 13a or 13b between two points in time during the presentation duration of the visual aerial presentation 2. The visual aerial presentation 2 may be a combination of spatially static and spatially dynamic sequences.

In the above context, each UAV 6 may move along a spatial or temporal sequence of image positions 13, which may essentially correspond to a predetermined route or a predetermined "track" based on coordinate data. This position information, namely the predetermined track, may be computed by the control station 4 and transmitted via the communication unit 5 of the control station 4 and the communication unit 12 of the UAV 6 to the control unit 8 essentially in real-time. Alternatively, a part of the predetermined track may be preset and stored the storage unit 14 of at least one UAV 6. Alternatively, all of the predetermined track may be preset and stored in the storage unit 14 of at least one UAV 6 or all UAVs 6, whereas in the latter case no control station 4 would be needed.

The control unit 8 may be configured to rotate via feedback from the orientation sensor unit 15 and/ or the control station 4 the display 11 and/or the UAV 6 according to display orientation information. The display orientation information may be dependent on the position information.

The control station 4 and the control units 8 may be additionally configured to communicate time code signals via their communication units 5 and 12 in order to perform time code synchronisation of the position information and/ or the pixel information. This is especially important, if the position information and the pixel information comprise a combination of dynamic position information and dynamic pixel information, since in this case displaying the various portions of pixels 3a and 3b at the right image position 13a or 13b and at the right point of time is very complex. Based on the actual time code signal the receiving control unit 8 decides which pixel information, for example which frame of the video data, is being displayed on the display 11.

In addition, time code synchronisation may be done in-between the single UAVs 6, especially if no control station 4 is present. Alternatively, time code synchronisation may be achieved by reading the time code from a global time synchronisation source, for example GPS or DGPS, available to all UAVs 6. Alternatively, time code synchronisation may be achieved by manually synchronising all UAVs 6 at the beginning of the presentation duration of the visual aerial presentation 2.

In an alternative embodiment, the space sensor unit 16 constantly tracks the distance to the neighbouring UAVs 6 essentially in real time. The control station 4 and/ or the control unit 8 of each UAV 6 may then update essentially in real-time the position information and/ or the pixel information via feedback from the space sensor unit 16 and move the UAV 6 according to swarm intelligence. Thus, it may be sufficient to control only one to five UAVs 6 via the control station 4 in order to move a huge amount of UAVs 6, since the residual UAVs 6 follow the controlled UAVs 6 based on swarm intelligence. As a result, the necessary amount of transmitted information can be reduced strongly.

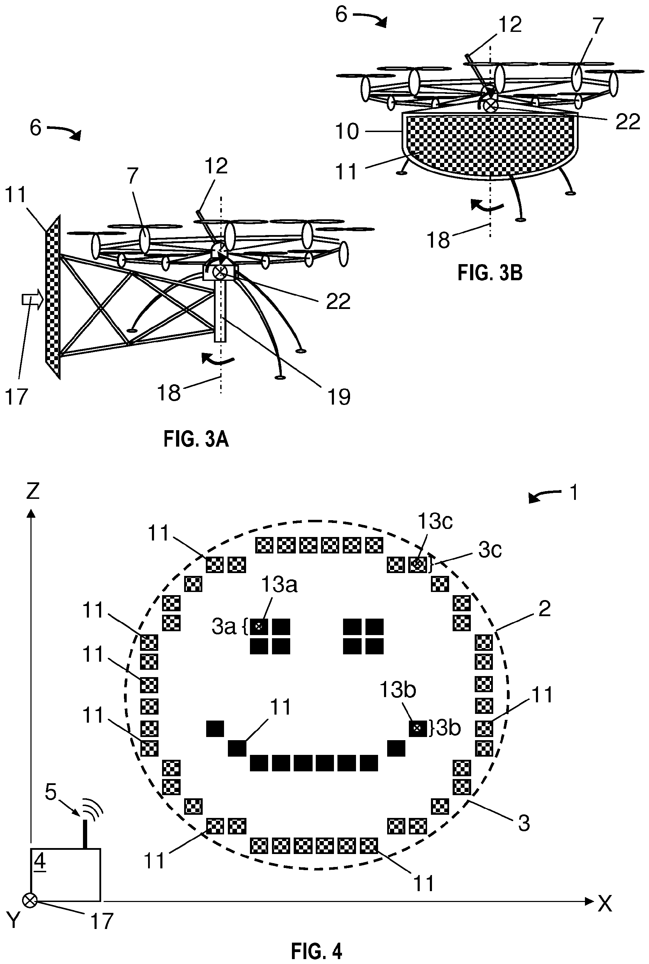

Figures 3A and 3B show alternative embodiments of the UAV 6. In Figure 3A, the display 11 is a flat assembly of pixel components, namely a frameless flat screen. Each pixel component is an LED, wherein each LED is a pixel. The frameless flat screen can have a resolution, amongst others, of 720 × 480 pixels, 720 × 576 pixels, 1280 × 720 pixels, 1920 × 1080 pixels, 3840 × 2160 pixels, or 7680 × 4320 pixels. The frameless flat screen has a size that essentially covers the whole UAV 6 if seen from a viewing direction 17. The display is an integral part of the body 10 of the UAV 6, which body is partially omitted in order to simplify the representation. The control unit 8 is configured to rotate the body 10 or the display 11 around a rotation axis 18 via feedback from the orientation sensor unit 15 and/ or the control station 4 according to the display orientation information. The rotation around the rotation axis 18 may be done by the drive unit 7 or by rotation means 19. Additionally, the body 3 or the display 11 may be tilted around a tilting axis 22, which in the all shown figures is essentially parallel to a plane spanned by the X- and Y-axis. The tilting axis 22 can change its direction according to the movement of the UAV 6.

In Figure 3B the display 11 is a curved assembly of one or more pixel components, namely a curved screen, wherein the curvature of the assembly corresponds to the body 10 of the UAV 6. Each pixel component is an area light source, for example an OLED display, capable of displaying a picture comparable to a certain number of pixels. The OLED display can have a resolution, amongst others, comparable to 720 × 480 pixels, 720 × 576 pixels, 1280 × 720 pixels, 1920 × 1080 pixels, 3840 × 2160 pixels, or 7680 × 4320 pixels. The control unit 8 is configured to rotate the body 10 or the display 11 around the rotation axis 18 via feedback from the orientation sensor unit 15 and/ or the control station 4 according to the display orientation information. The rotation around the rotation axis 18 may be done by the drive unit 7. Additionally, the body 10 or the display 11 may be tilted around the tilting axis 22.

Alternatively, the number of pixels 3 or portions of pixels 3a or 3b may be generated by any kind of point light source, area light source or any kind of other light source, such as light bulbs, LASERs, laser diodes, etc.

Figure 4 shows a system 1 according to a second embodiment of the invention for providing a visual aerial presentation 2 of a number of pixels 3. The system 1 is very similar to the system of figure 1 and comprises a ground-based control station 4 with a communication unit 5 and 62 UAVs 6. The UAVs 6 are of the embodiment as shown in figure 3A, whereas in figure 4 only the displays 11 of the UAVs 6 can be seen, since figure 4 represents a front elevation in viewing direction 17.

Each UAV 6 is positioned at its image position 13a, 13b, 13c, ... in the aerial space according to the position information, and presents at this image position 13a, 13b, 13c, ... via the display 11 a portion of pixels 3a, 3b, 3c, ... of the number of pixels 3 according to the pixel information. The visual aerial presentation 2 is composed of the form and the contour of a representation of a "smiley". The inner displays 11 display the eyes and the mouth, for example by identical colouring of all pixels of the displays 11. The outer displays 11 displaying the contour of the head may display video data of changing colours or rotating colour changes. The contour of the head may change between two points of time, for example it may shrink or expand or distort.

In the embodiment of figure 4, the number of pixels 3 equals the sum of the 62 portions of pixels 3a, 3b, 3c, ... displayed at the image positions 13a, 13b, 13c, ... by the displays 11 of the bodies 10 of the 62 UAVs 6. Note that in-between the different UAVs 6 there are larger gaps in the aerial space, which are not parts of the visual aerial presentation 2.

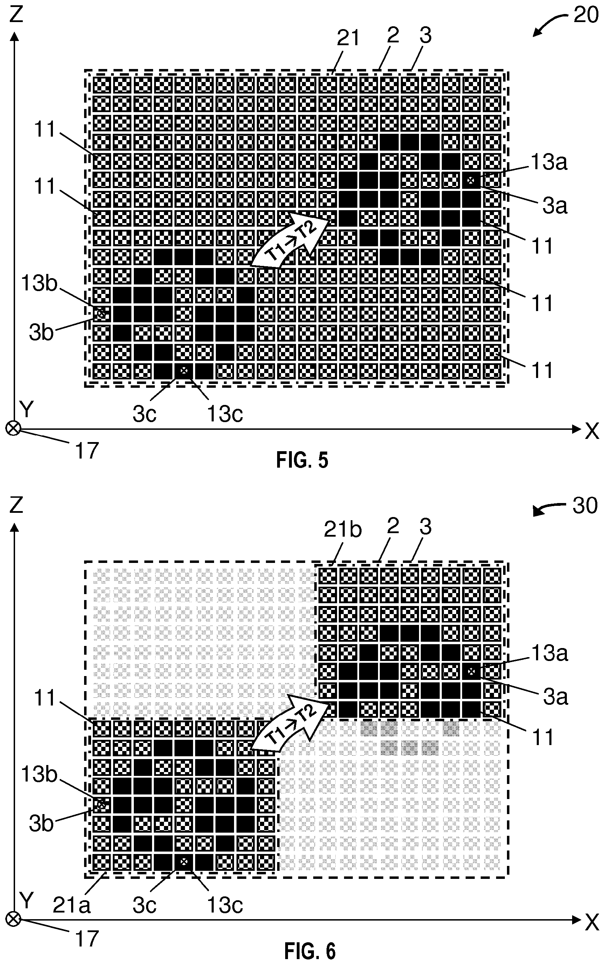

Figure 5 shows a system 20 according to a third embodiment of the invention for providing a visual aerial presentation 2 of a number of pixels 3. The system 20 comprises 320 UAVs 6. The UAVs 6 are of the embodiment as shown in figure 3A, whereas in figure 5 only the displays 11 of the UAVs 6 can be seen, since figure 5 represents a front elevation in viewing direction 17. All of the pixel information and all of the position information are preset and stored in the storage unit 14 and computed by the control unit 8 of each UAV 6, whereas, no control station 4 is needed. The UAVs 6 may communicate in-between each other via their communication units 12. In addition, the UAVs 6 may communicate according to swarm intelligence as described above.

In figure 5, the individual UAVs 6 are "stacked" in the aerial space, such that a virtual single display 21 is being created. The video content based on the pixel information, which in the example of figure 5 basically is a football represented by the black coloured portions of pixels 3a, 3c, ..., is displayed at two points in time T1 and T2 during the presentation duration of the visual aerial presentation 2. At T1, the football is displayed in the lower left corner of the virtual single display 21. At T2, which chronologically is after T1, the football is displayed in the upper right corner of the virtual single display 21. Various situations of the football at interim points of time may be displayed, showing the transition of the football from T1 to T2. In fact, the visual aerial presentation 2 displayed by the virtual single display 21 is a video of a flying football, wherein the number of pixels 3 equals the sum of the 320 portions of pixels 3a, 3b, 3c, ... displayed at the image positions 13a, 13b, 13c, ... by the displays 11 of the bodies 10 of the 320 UAVs 6.

Figure 6 shows a system 30 according to a fourth embodiment of the invention for providing a visual aerial presentation 2 of a number of pixels 3. The system 30 is very similar to the system of figure 5 and comprises 144 UAVs 6. The individual UAVs 6 are stacked in the aerial space such that two virtual single displays 21a and 21b are being created.

The video content based on the pixel information, which again is the football of figure 5, is displayed at two points in time T1 and T2 during the presentation duration of the visual aerial presentation 2. At T1, the football is displayed on the lower left virtual single display 21a. At T2, which chronologically is after T1, the football is displayed on the upper right virtual single display 21b. Various situations of the football at interim points of time may be displayed, showing the transition of the football from T1 to T2.

In this fourth embodiment, the number of pixels 3 does not equal the sum of the 144 portions of pixels 3a, 3b, 3c, ... displayed at the image positions 13a, 13b, 13c, ... by the displays 11 of the bodies 10 of the 144 UAVs 6, because the sum of the portions of pixels 3a, 3b, 3c at every point of time during the presentation duration of the visual aerial presentation 2 displays only a part of the number of pixels 3, which part is the sum portions of pixels 3a, 3b, 3c shown on the virtual single displays 21a and 21b. This part can be changed during the presentation duration of the visual aerial presentation by changing the image positions 13a, 13b, 13c, ... of the displays 11 in the aerial space. The residual part of the number of pixels 3 of the visual aerial presentation 2, which in figure 6 is depicted partially transparent, is not displayed and thus not visible. Nevertheless, this residual part is part of the pixel information of the visual aerial presentation 2. Thus, the pixel information appears to be static information, whereas the displays 11 of the UAVs 6 always show a certain part of the visual aerial presentation 2 according to their image positions 13a, 13b, 13c.

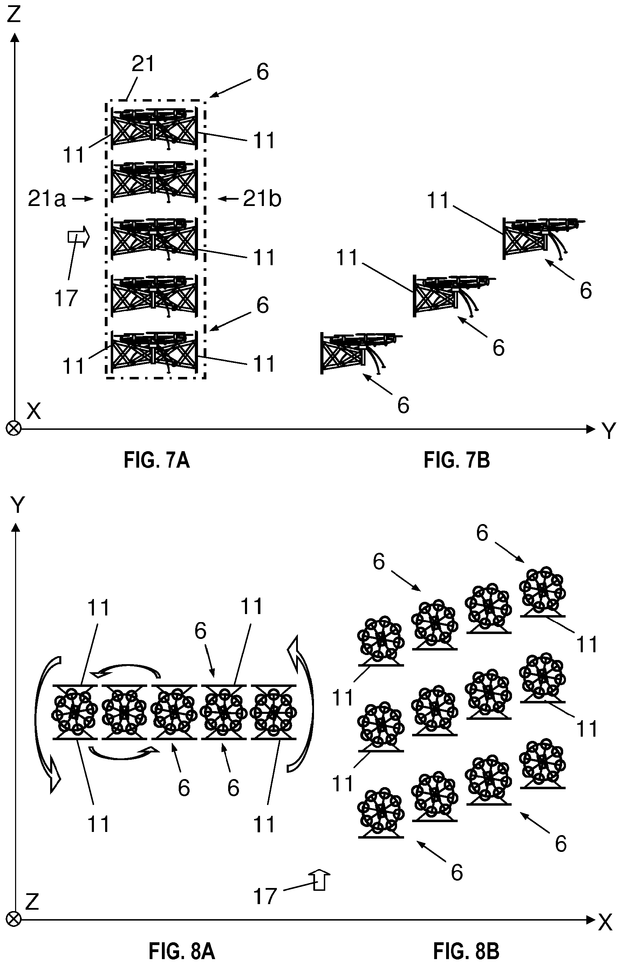

In terms of "stacking", the individual UAVs 6 can be stacked essentially within one essentially vertical plane, such that the virtual single display 21 is a quasi two-dimensional display. This situation is shown in figure 7A, wherein the bodies 10 of the UAVs 6 comprise two displays 11, which are flat screens, each at the opposite of the other. Thus, two virtual single displays 21a and 21b viewable from two sides can be created. Alternatively, more than two displays 11 may be integrated into the body 10 of each UAV 6. Such a virtual single display 21 may be rotated as shown in figure 8A. Alternatively, or in addition, the whole individual UAVs 6 may be rotated.

Alternatively, the individual UAVs 6 can be stacked within different essentially vertical or essentially horizontal planes, as shown in figures 7B and 8B. In view of the viewing direction 17 still a virtual single display 21 appears. This "offset stacking" of the individual UAVs 6 may lead to additional advantageous visual effects, or may be used to reduce the mutual influence of the drive units 7 of the UAVs 6. In case of such an offset stacking, each control unit 8, which may further comprises image processing means may be configured to process via the image processing means a part or all of the portion of pixels 3a, 3b, 3c, ... in terms of at least one of the following: size, distortion, colour, brightness, frames per second of video data. Thus, the spatial differences of the single UAVs 6 can be compensated and/ or advantageous visual effects may be created.

In a further embodiment, the UAVs 6 may comprise interaction sensor units in order to interact with a user, such as a visitor of a music concert or a sports event. Thus, the system 20 or 30 may change the displayed content based on the pixel information of the virtual single display 21 and/ or the form of the virtual single display 21 based on the position information in relation to the interaction of the user sensed by the interaction sensor units. Such a interaction may be the waving of arms or the kissing of two people.

A method for providing the visual aerial presentation 2 of a number of pixels 3 with the system 20 shown in figure 5 can comprise the following procedure:
All of the position information and the pixel information is input and preset, for example from a laptop, and stored in the storage unit 14 of each UAV 6. The UAVs are positioned for take-off and the presentation of the visual aerial presentation 2 is started, for example by manually activating all UAVs.

Consequently, each control unit 8 controls its drive unit 7 in order to move its UAV 6 in the aerial space to an image position 13a, 13b, 13c, ... according to the position information stored in the storage unit 14 to form a virtual single display 21. As a next step, each control unit 8 controls its display 11 to present at this image position 13a, 13b, 13c, ... a portion of pixels 3a, 3b, 3c, ... of the number of pixels 3 according to the pixel information stored in the storage unit 14. Thus, the virtual single display 21 presents the video of the flying football. In a next sequence of the visual aerial presentation 2, the UAVs 6 may change their image position 13a, 13b, 13c, ... in order to change the "virtual aspect ratio" of the virtual single display 21 and a video of a couple of flying footballs may be presented, whereas the control unit 8 of each individual UAV 6 changes the displayed pixel information essentially in real-time based on the change of the image position 13a, 13b, 13c, ... of its UAV 6. Thus, the video can be displayed correctly even during the change of the image position 13a, 13b, 13c, ... In this context, the control units 8 may use time synchronisation by reading the time code from a global time synchronisation source via their communication units 12.

The systems 1, 20, 30, or combinations or variations thereof may be used to present outdoor or indoor visual aerial presentations 2, such as image or video data, during public or cultural events, such as music concerts, sports events, or celebrations. In addition, the systems 1, 20, 30, or combinations or variations thereof may be used to present or display visual information, such as security information in the case of natural catastrophes where the local information infrastructure has been destroyed or is non-functional, or traffic information in the case of traffic jams or traffic accidents.

In a further embodiment of the invention the body of the UAV comprises balancing elements arranged in such a way to ensure that the position of the center of gravity of the weight of the overall UAV is in the center or middle axis of the UAV. This is in particular of essence for UAVs that comprise only one display arranged out of the center of the UAV. It is therefore advantageous to build UAVs with two displays opposite to each other as shown in figures 7A and 7B or to arrange three, four or even more displays symmetrical around the middle axis of the UAV to ensure that the center of gravity of the overall UAV falls within the middle axis of the UAV. This provides the advantage that the UAV carrying displays has good flight characteristics. The body of the UAV may comprise a grid structure to enable an easy fixation of the displays.

## Claims

1. System (1, 20, 30) for providing a visual aerial presentation (2) of a number of pixels (3), wherein the system (11, 20, 30) comprises a ground-based control station (4) and at least two UAVs (6), wherein each UAV (6) comprises a body (10), a display (11) for displaying pixel information, and a control unit (8) configured to control via feedback from a position sensor unit (9) a drive unit (7) of the UAV (6) in order to move the UAV (6) in the aerial space according to position information, **characterized in that**
the display (11) is an integral part of the body (10) of the UAV (6) and the control unit (8) is configured to move the UAV (6) to an image position (13, 13a, 13b, 13c) according to the position information, and to present at this image position (13, 13a, 13b, 13c) via the display (11) a portion of pixels (3a, 3b, 3c) of the number of pixels (3) according to the pixel information, wherein the pixel information and the position information are preset and stored in a storage unit (14) of the UAV (6) and/ or computed by the control station (4) and transmitted via communication units (5, 12) of the control station (4) and the UAV (6) to the control unit (8) essentially in real-time.

2. System (1, 20) according to claim 1, **characterized in that** the sum of all portions of pixels (3a, 3b, 3c) presented via the displays (11) of the UAVs (6) equals the number of pixels (3) of the visual aerial presentation (2).

3. System (1) according to claim 1 or 2, **characterized in that** the control station (4) and the control units (8) are configured to communicate time code signals via the communication units (5, 12) of the control station (4) and the UAVs (6) in order to perform time code synchronisation of the position information and/ or the pixel information.

4. System (20, 30) according to claim 1 or 2, **characterized in that** all of the position information and the pixel information is stored in the storage unit (14) of each UAV (6), wherein each control unit (8) is configured to communicate time code signals via the communication units (12) of the UAVs (6) in order to perform time code synchronisation of the position information and/ or the pixel information.

5. System (1, 20, 30) according to any of the claims 1 to 4, **characterized in that** the pixel information comprises dynamic information, wherein the portion of pixels (3a, 3b, 3c) presented via the display (11) of at least one UAV (6) changes between two points in time.

6. System (1, 20, 30) according to any of the claims 1 to 5, **characterized in that** the position information comprises dynamic information, wherein the image position (13, 13a, 13b, 13c) of at least one UAV (6) changes at least one time between two points in time.

7. System (1, 20, 30) according to claim 6, **characterized in that** the control station (4) and/ or the control units (8) are configured to change the displayed portion of pixels (3a, 3b, 3c) based on the pixel information essentially in real-time based on the change of the image position (13, 13a, 13b, 13c).

8. System (1, 20) according to any of the claims 1 to 7, **characterized in that** each UAV (6) further comprises a space sensor unit (16), wherein the control unit (8) is configured to move the UAV (6) according to swarm intelligence, wherein the control station (4) and/ or the control unit (8) are configured to update essentially in real-time the position information and/ or the pixel information via feedback from the space sensor unit (16).

9. System (1) according to any of the claims 1 to 8, **characterized in that** each UAV (6) further comprises an orientation sensor unit (15), wherein the control unit (8) is configured to rotate via feedback from the orientation sensor unit (15) and/ or the control station (4) the UAV (6) and/ or the display (11) according to display orientation information.

10. System (1, 20, 30) according to any of the claims 1 to 9, **characterized in that** the display (11) is a flat assembly of pixel components, preferably a frameless flat screen, or a curved assembly of pixel components, wherein the curvature of the assembly corresponds to the body (10) of the UAV (6).

11. Method for providing a visual aerial presentation (2) of a number of pixels (3), wherein the visual aerial presentation (2) is displayed by at least two displays (11) each carried by an UAV (6), wherein each UAV (6) is moved in the aerial space by a drive unit (7) controlled by a control unit (8) via feedback from a position sensor unit (9), **characterized in that** the method comprises the following steps:
a) move the UAV (6) in the aerial space to an image position (13, 13a, 13b, 13c) according to position information; and
b) present at this image position (13, 13a, 13b, 13c) via the display (11) a portion of pixels (3a, 3b, 3c) of the number of pixels (3) according to pixel information, wherein the display (11) is an integral part of a body (10) of the UAV (6), and wherein the pixel information and the position information are preset and stored in a storage unit (14) of the UAV (6) and/ or computed by a control station (4) and transmitted via communication units (5, 12) of the control station (4) and the UAV (6) to the control unit (8) essentially in real-time.

12. Method according to claim 11, **characterized in that** the control station (4) and the control units (8) communicate time code signals via the communication units (5, 12) of the control station (4) and the UAVs (6) in order to perform time code synchronisation of the position information and/ or the pixel information.

13. Method according to claim 11, **characterized in that** all of the position information and the pixel information is stored in the storage unit (14) of each UAV (6), wherein each control unit (8) communicates time code signals via the communication units (12) of the UAVs (6) in order to perform time code synchronisation of the position information and/ or the pixel information.

14. Method according to any of the claims 11 to 13, **characterized in that** the position information comprises dynamic information, wherein at least one UAV (6) changes its image position (13, 13a, 13b, 13c) at least one time between two points in time.

15. Method according to claim 14, **characterized in that** the pixel information comprises dynamic information, wherein the control station (4) and/ or the control unit (8) change/s the displayed pixel information essentially in real-time based on the at least one change of the image position (13, 13a, 13b, 13c) of the at least one UAV (6).

16. Method according to any of the claims 11 to 15, **characterized in that** each UAV (6) further comprises a space sensor unit (16), wherein the control unit (8) moves the UAV (6) according to swarm intelligence, wherein the control station (4) and/ or the control unit (8) update the position information and/ or the pixel information via feedback from the space sensor unit (16) essentially in real-time.
